# EUROPÄISCHE PATENTSCHRIFT

(11) **EP 3 299 165 B1**
(45) Veröffentlichungstag und Bekanntmachung des Hinweises auf die Patenterteilung: **12.08.2020**
(21) Anmeldenummer: 16189917.4
(22) Anmeldetag: 21.09.2016
(51) Int. Cl.: B32B 27/34, B32B 25/08, B32B 27/08, B32B 27/30, B32B 1/02, B32B 1/08, F16L 9/14, F16L 11/04, C08L 77/00

(54) **MEHRSCHICHTIGER HOHLKÖRPER MIT HOHER AUSWASCHBESTÄNDIGKEIT**
MULTILAYER HOLLOW BODY WITH HIGH WASHING RESISTANCE
CORPS CREUX MULTICOUCHES TRES RESISTANT AU LAVAGE

(43) Veröffentlichungstag der Anmeldung: 28.03.2018
(73) Patentinhaber: Evonik Operations GmbH, 45128 Essen (DE)
(72) Erfinder: BERGER, Dr. Jasmin, 44141 Dortmund (DE); KUHMANN, Dr. Karl, 48249 Dülmen (DE); RESING, Mario, 48703 Stadtlohn (DE); HEIMINK, Dr. Jan, 58454 Witten (DE); FARGES, Olivier, 45768 Marl (DE); ALTKEMPER, Stefan, 46282 Dorsten (DE)
(74) Vertreter: Evonik Patent Association

(56) Entgegenhaltungen:
- EP-A1- 1 182 345
- EP-A2- 1 216 823
- EP-A2- 1 216 825
- EP-A2- 1 216 826
- WO-A1-2017/121961
- DE-A1-102005 061 530
- JP-A- 2016 083 908
- US-A1- 2002 033 197
- US-A1- 2008 057 246

## Beschreibung

Gegenstand der Erfindung ist ein mehrschichtiger Hohlkörper, der über die Auswahl der eingesetzten Formmassen der einzelnen Schichten eine sehr hohe Auswaschbeständigkeit besitzt. Der mehrschichtige Hohlkörper ist in erster Linie ein Hohlprofil, wie beispielsweise ein Rohr, oder ein Behälter zum Durchleiten oder Lagern flüssiger oder gasförmiger Medien.

Flexible Rohre, die zur Führung flüssiger oder gasförmiger Medien in Kraftfahrzeugen eingesetzt werden, sind gut bekannt. Früher wurde diese Aufgabe zufriedenstellend über Monorohre aus Polyamid oder anderen thermoplastischen Formmassen gelöst. Bei diesen Monorohren erwies es sich, dass die nach Einbau vorliegenden mechanischen Eigenschaften wie hohe Reißdehnung und hohe Schlagzähigkeit auch über die Lebensdauer des Kraftfahrzeugs hinweg durch Kälte- oder Hitzeeinwirkung oder durch Medienkontakt nicht so stark verändert werden, dass dies zu einem Ausfall der Leitung führt.

Strengere Umweltvorschriften haben dazu geführt, dass von der weiteren Entwicklung und dem Einsatz von Monorohren für den Einsatz als Kraftstoffleitung sowie von einschichtigen Kraftstoffbehältern Abstand genommen wurde. Bei beiden wird von der Automobilindustrie neben einer ausreichenden Kraftstoffbeständigkeit auch eine verbesserte Sperrwirkung gegenüber den Kraftstoffkomponenten verlangt, um deren Emissionen in der Umwelt zu reduzieren. Dies hat zur Entwicklung von mehrschichtigen Hohlkörpern geführt, bei denen beispielsweise Ethylen-Vinylalkohol-Copolymer (EVOH) als Sperrschichtwerkstoff zum Einsatz kommt. Derartige Mehrschichtverbunde, die neben einer EVOH-Schicht weitere Schichten auf Basis aliphatischer Polyamide enthalten, sind beispielsweise aus der EP 1216826 A2 bekannt.

Polyamide kommen wegen ihrer guten mechanischen Eigenschaften, ihres geringen Wasseraufnahmevermögens und ihrer Unempfindlichkeit gegenüber Umwelteinflüssen als Material sowohl für die Innenschicht als auch für die Außenschicht in Frage. Allerdings ist EVOH unverträglich mit Polyamiden wie PA11, PA12, PA1012 oder PA1212 und nur wenig verträglich mit PA612. Eine Haftung zwischen den aneinander grenzenden Schichten ist jedoch unverzichtbar und kann somit nur bei Zwischenschaltung einer Haftvermittlerschicht gewährleistet werden. In der Automobilindustrie besteht seit einiger Zeit darüber hinaus ein Trend zu höheren Temperaturen im Motorraum und somit die Forderung nach einer Beständigkeit der eingesetzten Hohlkörper bei diesen Temperaturen. Lösungen, die eine Haftvermittlerschicht auf Basis z.B. von Polyolefinen beinhalten, sind somit wegen deren niedriger Wärmeformbeständigkeit nicht geeignet. In der EP 1216 826 A2 wird dieses Problem gelöst durch Verwendung einer haftvermittelnden Schicht enthaltend ein Polyamid ausgewählt aus PA6, PA66 und PA6/66, gegebenenfalls ein Polyamin-Polyamid-Copolymer sowie ein Polyamid ausgewählt aus PA11, PA12, PA612, PA1012 und PA1212.

Der fortschreitende Trend des "Downsizing", also der Verkleinerung technischer Größen bei Erhaltung der gleichen Leistungsfähigkeit mit Ziel der Senkung des Energiverbrauchs von z.B. Fahrzeugmotoren führt neben der Erhöhung der herschenden Temperaturen im Motorraum auch zu einer Verkleinerung der Einspritzventile. Diese Ventile sind Düsen, die an einem Verbrennungsmotor Kraftstoff in den Ansaugetrakt oder den Verbrennungsraum einspritzen. Polare Bestandteile, die in Kraftstoffen enthalten sind, erfordern, dass das eingesetzte Mehrschichtrohr gegen Extraktion von Bestandteilen aus den eingesetzten Materialien resistent ist. US 6467508 beschreibt das Ausfallen solcher Extrakte im Kraftstoff und das mögliche Verstopfen der Einspritzventile als Problem. Gelöst wird dieses Problem durch den Einsatz eines wenig Ausfällungen bildenden Polyamids ("low precipitate polyamide") in der Innenschicht. Das "low precipitate polyamide" ist gewaschenes Polyamid, welches durch aufwendige und kostspielige vorherige Extraktion mit Methanol erhalten wird. Auf diese Weise werden störende Bestandteile wie beispielsweise Oligomere entfernt.

Nach der fortschreitenden Verkleinerung der Einspritzdüsen fordert die Automobilindustrie neben der Reduzierung der im Kraftstoff ausfallenden Extrakte auch eine Reduzierung der im Kraftstoff löslichen Extrakte. Wegen der Einführung von Hybridfahrzeugen hat sich diese Forderung verstärkt, da bei diesen Fahrzeugen über längere Zeit der Verbrennungsmotor nicht genutzt wird. Auch lösliche Extrakte im Kraftstoff können somit über Eintrocknen zur Verstopfung von Einspritzdüsen führen. Die problematischen Extrakte stammen dabei nicht nur aus der Innenschicht des Mehrschichtrohres, sondern vor allem auch aus allen weiteren Schichten, die nicht über eine Barriereschicht (wie eine EVOH-Schicht) vom Kraftstoff getrennt sind. Extrakte sind neben den, in der US 6467508 beschriebenen, Oligomeren auch Additive wie beispielsweise Weichmacher und Stabilisatoren der eingesetzten Formmassen.

EP 1216826 A2 ist auf einen Mehrschichtverbund mit einer EVOH-Schicht gerichtet, deren Innenschichten Weichmacher enthalten.

EP 1216825 A2 offenbart Mehrschichtverbünde, deren Innenschicht aus PA6 besteht, Schichten aus EVOH werden nicht offenbart.

EP 1216823 A2 offenbart Mehrschichtverbünde, die mindestens eine Schicht aus einer Polyolefin-Formmasse aufweisen, auch dieser Schrift offenbart keine EVOH-Schichten,

DE 10 2005 061530 A1 offenbart Mehrschichtverbünde, die als Trennschicht eine EVOH-Schicht aufweisen. Diese Schrift offenbart entweder keine Haftvermittlerschicht oder falls diese vorhanden ist, weist sie einen Weichmacher auf.

US 2002/0033197 A1 und EP 1182345 A1 sind auf Mehrschichtverbünde gerichtet, deren gegebenenfalls vorhandenen Haftvermittlerschichten zwischen einer EVOH-Schicht und der Innenschicht aus PA6 oder einem Polyolefin bestehen.

WO 2017/121961 (nachveröffentlicht) ist auf mehrschichtige Kraftstoff führende Rohre gerichtet, die eine Barriereschicht enthalten. Die Schichtenfolgen der Beispiele weisen entweder keine haftvermittelnde Schicht auf, oder falls diese vorhanden ist, zeichnet sie sich dadurch aus, dass der Gehalt an Polyamid X.Y unter 50 Gew.-% liegt.

JP 2016-083908 ist auf mehrschichtige Kraftstoff führende Rohre gerichtet, die eine Barriereschicht aus EVOH enthalten und mindestens 3 weitere Schichten unterschiedlicher aliphatischer Polyamide enthalten, wobei eine haftvermittelnde Schicht immer zu mindestens 50 Gew.-% aus PA6/6.6/12 und einem Weichmacher besteht. Eine haftvermittelnde Schicht ohne Weichmacher wird nicht offenbart,.

US 2008/0057246 ist auf mehrschichtige Rohre gerichtet, deren hohe Reißdehnung von einer hohen Abzugsgeschwindigkeit und der Zusammensetzung der äußeren Schicht abhängig sein soll. Keines der Beispiele offenbart eine weichmacherfreie Innenschicht und die Verwendung eines Haftvermittlers.

Demzufolge besteht die Aufgabe der Erfindung darin, einen Verbund aus einer EVOH-Schicht und mindestens zwei Polyamidschichten zur Verfügung zu stellen, der eine hohe Wärmeformbeständigkeit sowie eine hohe Schlagfestigkeit aufweist und bei dem darüber hinaus eine gute Schichtenhaftung erhalten wird, wobei der gesamte Mehrschichtverbund eine hohe Auswaschbeständigkeit besitzt, d.h. sowohl unlösliche als auch lösliche Extrakte nach Kraftstoffkontakt auf einem sehr niedrigem Niveau liegen.

Diese Aufgabe wird durch einen mehrschichtigen Hohlkörper gelöst, der folgende Schichten enthält:
I. Eine Innenschicht (Schicht I), die in direktem Kontakt mit dem beförderten oder gelagerten Medium steht, aus einer Formmasse auf Basis von PA612, PA610, PA1010, PA1012 und/oder PA1212 und deren Copolymere sowie Mischungen daraus;
II. eine Haftvermittlerschicht (Schicht II) aus einer Formmasse auf Basis folgender Komponenten:
   a) 0 bis 80 Gew.-Teile eines Polyamids, ausgewählt aus PA6, PA66, PA6/66 und Mischungen hiervon,
   b) 0 bis 100 Gew.-Teile eines Polyamin-Polyamid-Copolymeren sowie
   c) 0 bis 80 Gew.-Teile eines Polyamids, ausgewählt aus PA11, PA12, PA612, PA1010, PA1012, PA1212 und Mischungen hiervon,
   wobei die Summe der Gewichtsteile der Komponenten gemäß a), b) und c) 100 beträgt und wobei zusätzlich in der Summe der Komponenten a) und b) mindestens 16 Gew.-Teile aus Monomereinheiten bestehen, die sich von Caprolactam und/oder der Kombination Hexamethylendiamin/Adipinsäure herleiten und in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.10-Decandisäure, der Kombination 1.10-Decandiamin/1.12-Dodecandisäure und/oder der Kombination 1.12-Dodecandiamin/1.12-Dodecandisäure herleiten;
III. eine Schicht (Schicht III) aus einer Ethylen-Vinylalkohol-Copolymer-Formmasse,
   wobei
   die Formmasse der Schicht I sowie auch die Formmasse der Schicht II keinen Weichmacher enthält und wobei im Fall, dass die Schicht II ein Blend aus den Komponenten gemäß a) und c) ist, das Blend unter Bedingungen hergestellt wird, bei denen in einem gewissen Ausmaß die beiden Polyamide über die Endgruppen oder über Umamidierungsreaktionen miteinander zu Blockcopolymeren reagieren oder eine einer wirksamen Menge an Komponente gemäß b) zugegeben wird und
   aus dem mehrschichtigen Hohlkörper als Gesamtsystem bei erstmaliger Kraftstofflagerung maximal 0,2 g/m², vorzugsweise maximal 0,18 g/m² und besonders bevorzugt maximal 0,16 g/m² unlöslicher Extrakt sowie maximal 7,0 g/m², vorzugsweise maximal 6,0 g/m² und besonders bevorzugt maximal 5,5 g/m² löslicher Extrakt ausgewaschen wird, bestimmt nach der als Prüfung f) im experimentellen Teil beschriebenen Methode an einem Mehrschichtrohr mit dem gleichen Schichtenaufbau, einer Wandstärke von 1 mm und einem Innendurchmesser von 6 mm, wonach ein Rohrabschnitt von 2 m Länge vollständig mit dem Testkraftstoff FAM B (gemäß DIN 51604-1/2) befüllt und verschlossen bei 60°C für 96 h gelagert wird, nach Abkühlung das Rohr in ein Becherglas entleert und mit 20 ml FAM B das Rohr gespült wird, die erhaltene Flüssigkeit bei 23°C 24 h gelagert wird, im Anschluss die Prüfflüssigkeit bei 23°C unter Vakuum filtriert wird und mit 20 ml FAM B nachgespült wird, das filtrierte Medium wird im Abzug bei Raumtemperatur verdampfen gelassen, daraus ergeben sich mittels Auswiegen die löslichen Extrakte, der Filter wird 24 h bei 40°C getrocknet und ausgewogen, über die Differenz zum ursprünglichen Gewicht des Filters werden die unlöslichen Extrakte bestimmt. Falls der mehrschichtige Hohlkörper eine andere Wandgeometrie besitzt, müssen also, um Vergleichbarkeit zu schaffen, die einzelnen Schichtdicken auf eine Gesamtwandstärke von 1 mm umgerechnet werden.

Der Ausdruck "auf Basis" bedeutet hier, dass die jeweilige Formmasse mindestens 50 Gew.-%, bevorzugt mindestens 60 Gew.-%, besonders bevorzugt mindestens 65 Gew.-% und insbesondere bevorzugt mindestens 70 Gew.-% dieser Polyamide beziehungsweise des Polyamin-Polyamid-Copolymeren enthält, jeweils bezogen auf die gesamte Formmasse. Darüber hinaus sind in der Regel weitere Zusätze enthalten, die weiter unten näher beschrieben sind, so dass sich insgesamt eine Summe von 100 Gew.-% ergibt. Weiterhin ist bevorzugt, dass die Formmasse darüber hinaus keine weiteren Polyamide enthält.

"Gleicher Schichtenaufbau" heißt, dass nicht nur die Schichtenfolge und die Zusammensetzung der Schichten gleich sind, sondern auch dass bei abweichender Wandstärke die einzelnen Schichtdicken auf 1 mm Gesamtwandstärke umgerechnet werden.
Die Innenschicht (Schicht I) ist dazu vorgesehen, in direktem Kontakt mit dem beförderten oder gelagerten Medium zu stehen.

Der mehrschichtige Hohlkörper ist vorzugsweise eine Komponente eines kraftstoffführenden Systems, beispielsweise eine Kraftstoffleitung oder ein Kraftstoffbehälter, wobei der Kraftstoff weiterhin bevorzugt Benzin ist.

Die Haftvermittlerschicht (Schicht II) ist vor allem dann optional, wenn die Formmasse der Schicht I PA610 enthält und insbesondere, wenn das Polyamid der Schicht I aus PA610 besteht, da in diesem Fall eine Haftung zwischen Schicht I und Schicht III erzielt werden kann, die für viele Anwendungen ausreicht. Wenn die Schicht I auf einem oder mehreren der anderen anspruchsgemäßen Polyamide basiert, ist die Schicht II oder eine gleichwirkende Haftvermittlerschicht in der Regel erforderlich.

In einer bevorzugten Ausführungsform besteht die Schicht I aus einer Formmasse auf Basis von PA612, PA610, PA1010, PA1012 und/oder PA1212 und deren Copolymeren sowie Mischungen daraus. Bei dieser Ausführungsform ist weiterhin bevorzugt, dass die Formmasse der Schicht II weder PA11 noch PA12 enthält.

Das Polyamid der Schicht I ist besonders bevorzugt PA612. In diesem Fall ist weiterhin bevorzugt, dass die Formmasse der Schicht II als Polyamidkomponente eine Mischung aus PA612 und PA6 enthält.

Von der Komponente gemäß a) sind in der Formmasse der Schicht II bevorzugt mindestens 0,5 Gew.-Teile, besonders bevorzugt mindestens 10 Gew.-Teile, insbesondere bevorzugt mindestens 20 Gew.-Teile und ganz besonders bevorzugt mindestens 30 Gew.-Teile enthalten, während die Obergrenze bevorzugt bei 70 Gew.-Teilen und besonders bevorzugt bei 60 Gew.-Teilen liegt.

Von der Komponente gemäß b) sind in der Formmasse der Schicht II bevorzugt mindestens 0,5 Gew.-Teile, besonders bevorzugt mindestens 2 Gew.-Teile, insbesondere bevorzugt mindestens 5 Gew.-Teile und ganz besonders bevorzugt mindestens 10 Gew.-Teile enthalten, während die Obergrenze bevorzugt bei 80 Gew.-Teilen, besonders bevorzugt bei 60 Gew.-Teilen und insbesondere bevorzugt bei 40 Gew.-Teilen liegt.

Von der Komponente gemäß c) sind in der Formmasse der Schicht II bevorzugt mindestens 0,5 Gew.-Teile, besonders bevorzugt mindestens 10 Gew.-Teile, insbesondere bevorzugt mindestens 20 Gew.-Teile und ganz besonders bevorzugt mindestens 30 Gew.-Teile enthalten, während die Obergrenze bevorzugt bei 70 Gew.-Teilen und besonders bevorzugt bei 60 Gew.-Teilen liegt.

In einer bevorzugten Ausführungsform folgen die Schichten I, II und III direkt aufeinander.

In einer weiteren bevorzugten Ausführungsform folgen auf die Schicht III nach außen hin weitere Schichten, die vorzugsweise aus Polyamidformmassen bestehen. Hierbei ist besonders bevorzugt, dass sich nach außen eine Schicht IV anschließt, die die gleiche Polyamidkombination wie eine Schicht II enthält. Ganz besonders bevorzugt folgt hierauf eine Schicht V aus einer Polyamidformmasse, die auf den gleichen Polyamiden basiert wie eine Schicht I.; auf diese Weise werden die für die Anwendung geforderten mechanischen Eigenschaften sichergestellt und gleichzeitig wird die Schicht III wirkungsvoll vor dem Zutritt von Luftfeuchtigkeit geschützt, was die Sperrwirkung verringern würde.

Im Rahmen der Erfindung kann sich dann, wenn es anwendungstechnisch sinnvoll ist, zusätzlich zwischen der Schicht II und der Schicht III und/oder zwischen der Schicht III und der Schicht IV eine weitere Schicht aus einer Polyamidformmasse befinden, die auf einem Polyamid basiert, das gut auf EVOH haftet. Dieses Polyamid ist beispielsweise PA6, PA66 oder PA6/66.

Die Schicht II ist im einfachsten Fall ein Blend aus den Komponenten gemäß a) und c). Da diese Polymeren miteinander weitgehend unverträglich sind, wird bei der Blendherstellung unter üblichen Verarbeitungstemperaturen, die zu einer physikalischen Mischung führt, nur in einem relativ engen Zusammensetzungsbereich eine ausreichende Haftvermittlerwirkung erzielt. Bessere Ergebnisse werden erhalten, wenn das Polyamidblend unter Bedingungen hergestellt wird, bei denen in einem gewissen Ausmaß die beiden Polyamide über die Endgruppen oder über Umamidierungsreaktionen miteinander zu Blockcopolymeren reagieren. Hierfür sind in der Regel Temperaturen oberhalb von 250°C, bevorzugt oberhalb von 280 °C und besonders bevorzugt oberhalb von 300°C und gegebenenfalls die Anwesenheit von Katalysatoren wie Hypophosphorige Säure, Dibutylzinnoxid, Triphenylphosphin oder Phosphorsäure erforderlich. Man kann auch von einem zunächst unter üblichen Verarbeitungsbedingungen hergestellten Polyamidblend ausgehen, das anschließend der Festphasennachkondensation unter Bedingungen unterworfen wird, die bei Polyamiden üblich sind. Dies sind in der Regel Temperaturen ab 140°C bis etwa 5K unterhalb des Kristallitschmelzpunkts Tₘ, bevorzugt Temperaturen ab 150°C bis etwa 10K unterhalb von Tₘ, mit Reaktionszeiten von 2 bis 48 Stunden, bevorzugt 4 bis 36 Stunden und besonders bevorzugt 6 bis 24 Stunden. Besonders vorteilhaft enthält das eine Polyamid einen Überschuss an Aminoendgruppen und das andere Polyamid einen Überschuss an Carboxylendgruppen. Schließlich kann eine Verknüpfung der Komponenten gemäß a) und c) auch durch Zugabe einer reaktiven Verbindung erzielt werden, die vorzugsweise die Polyamidendgruppen miteinander verknüpft, beispielsweise eines Bisoxazolins, Biscarbodiimids, Bisanhydrids, Diisocyanats oder der entsprechenden Verbindungen mit drei oder mehr funktionellen Gruppen.

Ein anderer Weg, die Komponenten gemäß a) und c) miteinander verträglich zu machen, ist die Zugabe einer wirksamen Menge der Komponente gemäß b).

Die einzelnen Komponenten werden im Folgenden näher erläutert.

PA6 wird durch ringöffnende Polymerisation von Caprolactam hergestellt.

PA66 wird durch Polykondensation von Hexamethylendiamin und Adipinsäure hergestellt. Es ist genauso wie PA6 in einer Vielzahl von Typen handelsüblich.

PA6/66 ist ein Copolykondensat ausgehend von den Monomeren Caprolactam, Hexamethylendiamin und Adipinsäure.

Das Polyamin-Polyamid-Copolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Polyamin-Polyamid-Copolymers im Bereich von 100 bis 2500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE- OS 196 54 058);
- Dendrimere wie beispielsweise
   ((H2N-(CH2)3)2N-(CH2)3)2-N(CH2)2-N((CH2)2-N((CH2)3-NH2)2)2
   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3, 15-Bis(2-aminoethyl)-6,12-bis[2-[bis(2-aminoethyl)amino]ethyl]-9-[bis[2-bis(2-aminoethyl)amino]ethyl]amino]ethyl]-3,6,9,12,15-pentaazaheptadecan-1,17-diamin (J.M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden Caprolactam, ε-Aminocapronsäure, Capryllactam, ω-Aminocapryisäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Beim Polyamin-Polyamid-Copolymer kann die Zusammensetzung des Polyamidanteils in einem sehr weiten Bereich variieren, da die Verträglichkeit mit den Polyamiden der Komponenten gemäß a) und c) offenbar von anderen Faktoren bestimmt wird und in der Regel gegeben ist.

Die Polyamin-Polyamid-Copolymere können nach verschiedenen Verfahren hergestellt werden.

Eine Möglichkeit besteht darin, die polyamidbildenden Monomere und das Polyamin zusammen vorzugeben und die Polymerisation bzw. die Polykondensation durchzuführen. Ein bevorzugtes Verfahren besteht jedoch darin, dass in einem zweistufigen Prozess zuerst gegebenenfalls die Lactamspaltung und die Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls man die Reaktion nicht in der Schmelze zu Ende führen will, kann das Polyamin-Polyamid-Copolymere gemäß dem Stand der Technik auch in fester Phase nachkondensiert werden.

PA11 wird durch Polykondensation von ω-Aminoundecansäure hergestellt, während PA12 durch ringöffnende Polymerisation von Laurinlactam erhalten wird. Beide Polymere sind in einer Vielzahl von Typen im Handel erhältlich.

PA610 wird auf bekannte Weise durch Polykondensation einer äquivalenten Mischung aus Hexamethylendiamin und 1.10-Decandisäure hergestellt, während PA612 auf bekannte Weise durch Polykondensation einer äquivalenten Mischung aus Hexamethylendiamin und 1.12-Dodecandisäure und PA1010 auf ebenso bekannte Weise durch Polykondensation einer äquivalenten Mischung aus 1.10-Decandiamin und 1.10-Decandisäure hergestellt wird.

PA1012 wird durch Polykondensation einer äquivalenten Mischung aus 1.10-Decandiamin und 1.12-Dodecandisäure hergestellt, während PA1212 auf gleiche Weise aus 1.12-Dodecandiamin und 1.12-Dodecandisäure erhalten wird.

Mit Vorteil können hier auch Mischungen verschiedener Polyamide eingesetzt werden, z. B. PA12/PA1012 oder PA12/PA1212. Derartige Mischungen zeichnen sich durch eine besonders hohe Tieftemperaturschlagzähigkeit aus; sie sind beispielsweise in der EP-A-0 388 583 beschrieben.

Die erfindungsgemäß verwendeten Polyamidformmassen der Schichten I, II, IV und V enthalten neben den beschriebenen Polymerkomponenten gegebenenfalls weitere Zusätze. Diese weiteren Zusätze sind, unter Berücksichtigung der weiter unten genannten Einschränkungen, beispielsweise:
a) Stabilisatoren,
b) andere Polymere,
c) Schlagzähmodifier
d) Weichmacher,
e) Pigmente und/oder Farbstoffe,
f) Zusätze, die die elektrische Leitfähigkeit erhöhen und
g) Verarbeitungshilfsmittel.

In einer bevorzugten Ausführungsform enthalten die Formmassen eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthalten die Formmassen etwa 0,01 bis etwa 2 Gew.-% und bevorzugt etwa 0,1 bis etwa 1,5 Gew.-% eines Oxidationsstabilisators.

Darüber hinaus können die Formmassen auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmassen können zusätzlich einen Hydrolysestabilisator enthalten wie etwa ein monomeres, oligomeres oder polymeres Carbodiimid oder ein Bisoxazolin.

Andere Polymere, die als Zusatz in den Formmassen enthalten sein können, sind beispielsweise Polyetheramide oder Polytetrafluorethylen (PTFE).

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid in Frage.

Geeignete Pigmente und/oder Farbstoffe sind beispielsweise Ruß, Eisenoxid, Zinksulfid, Ultramarin, Nigrosin, Perlglanzpigmente und Metallflitter.

Zusätze, die die elektrische Leitfähigkeit erhöhen, sind beispielsweise Leitfähigkeitsruß oder Carbon Nanotubes.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Die Formmasse wird aus den einzelnen Bestandteilen auf dem Fachmann bekannte Weise durch Mischen in der Schmelze hergestellt.

Das EVOH der Schicht III ist ein Copolymer aus Ethylen und Vinylalkohol. Der Ethylengehalt im Copolymeren beträgt in der Regel 25 bis 60 Mol-% und insbesondere 28 bis 45 Mol-%. Eine Vielzahl von Typen ist im Handel erhältlich. Beispielsweise sei auf die Firmenschrift "Introduction to Kuraray EVAL™ Resins", Version 1.2/9810 der Firma Kuraray EVAL Europe verwiesen. Die Formmasse kann neben dem EVOH gemäß dem Stand der Technik weitere Zusätze enthalten, wie sie für Sperrschichtanwendungen üblich sind. Derartige Zusätze sind in der Regel Know-How des EVOH-Lieferanden.

Der anspruchsgemäße geringe Extraktgehalt wird durch die Auswahl des Polyamids sowie durch die Maßnahme erreicht, dass die Formmasse der Schicht I sowie vorzugsweise auch die Formmasse der Schicht II keinen Weichmacher enthält. Darüber hinaus ist es vorteilhaft, wenn die Formmasse der Schicht I sowie vorzugsweise auch die Formmasse der Schicht II nur die gerade nötige Menge an Stabilisatoren sowie Verarbeitungshilfsmitteln enthält.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen spezifischen Oberflächenwiderstand von maximal 10⁹ Ω/square und vorzugsweise maximal 10⁶ Ω/square. Die Messmethode zur Bestimmung des Widerstands von mehrschichtigen Rohren ist in der SAE J 2260 vom November 2004 erläutert. In diesem Fall ist entweder die Schicht I als Ganzes elektrisch leitfähig ausgerüstet oder die Schicht I besteht aus zwei Subschichten, von denen die eine elektrisch leitfähig und die andere nicht elektrisch leitfähig ausgerüstet ist.

Bei der Ausführung des erfindungsgemäßen Mehrschichtverbundes als Hohlprofil (z. B. Rohr) oder Behälter kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf den Mehrschichtverbund aufgebracht werden, beispielsweise mittels Coextrusion, Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, weichgemachtes PVC, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US 5 554 425 beschrieben.

Die Erfindung soll im nachfolgenden experimentellen Teil beispielhaft erläutert werden.

In den Beispielen wurden folgende Komponenten bzw. Formmassen verwendet:

| | |
|---|---|
| **VESTAMID LX9002:** | Eine weichgemachte und schlagzähmodifizierte Extrusionsformmasse auf |
| | Basis von PA12 der EVONIK Resource Efficiency GmbH |
| **VESTAMID SX8002:** | Eine weichgemachte und schlagzähmodifizierte Extrusionsformmasse auf |
| | Basis von PA612 und PA6 der EVONIK Resource Efficiency GmbH |
| **VESTAMID SX8001:** | Eine weichgemachte und schlagzähmodifizierte Extrusionsformmasse auf |
| | Basis von PA6 der EVONIK Resource Efficiency GmbH |
| **EVAL F101:** | Ein EVOH der Fa. Kuraray mit 32 mol% Ethylen |

### Beispiel 1:

Es wurde ein Fünfschichtrohr mit einem Außendurchmesser von 8 mm und einer Gesamtwandstärke von 1 mm mittels Coextrusion hergestellt und zwar mit der folgenden Schichtenkonfiguration:

| | |
|---|---|
| Schicht V: | VESTAMID LX9002 |
| Schicht IV: | VESTAMID SX8002 |
| Schicht III: | EVAL F101 |
| Schicht II: | schlagzähmodifizierte Extrusionsformmasse auf Basis von PA612 und PA6 mit |
| | folgender Zusammensetzung: |
| | 65,3 Gew.-% PA612 |
| | 17,5 Gew.-% PA6 |
| | 16 Gew.-% polyolefinischer Schlagzähmodifier |
| | 1,2 Gew.-% Stabilisator sowie |
| | 0,02 Gew.-% Calciumstearat als Verarbeitungshilfsmittel |
| Schicht I: | schlagzähmodifizierte Extrusionsformmasse auf Basis von PA612 mit folgender |
| | Zusammensetzung: |
| | 89,5 Gew.-% PA612 |
| | 10 Gew.-% polyolefinischer Schlagzähmodifier |
| | 0,5 Gew.-% Stabilisator sowie |
| | 0,02 Gew.-% Calciumstearat |

Verqleichsbeispiel 1 (gemäß EP 1216826 A2; ist in der Automobilindustrie für Kraftstoffleitungen im Einsatz):
Es wurde ein Vierschichtrohr mit einem Außendurchmesser von 8 mm und einer Gesamtwandstärke von 1 mm mittels Coextrusion hergestellt und zwar mit der folgenden Schichtenkonfiguration:

| | |
|---|---|
| Schicht V: | VESTAMID LX9002 |
| Schicht IV: | VESTAMID SX8002 |
| Schicht III: | EVAL F101 |
| Schicht I: | VESTAMID SX8001 |

### Prüfungen:

a) Zugversuch: Die Mehrschichtrohre wurden in Anlehnung an DIN EN ISO 527-1 mit einer Abzugsgeschwindigkeit von 100 mm/min geprüft. Die Probekörper waren ca. 200 mm lang, die Einspannlänge betrug 100 mm und der Abstand der Dehnungsaufnehmer 50 mm.
b) Schlagbiegeversuch: Die Messung der Schlagzähigkeit der Mehrschichtrohre erfolgte nach DIN 73378 bei 23 °C und -40 °C. Hierfür wurden jeweils zehn ca. 100 mm lange Rohrabschnitte eingesetzt.
c) Fallhammertest: Der Fallhammertest wurde nach SAE-Spezifikation durchgeführt. Dabei wurde ein spezifisches Gewicht aus einer vorgeschriebenen Fallhöhe auf den Prüfkörper fallen gelassen. Über diese Prüfung wurde nach SAE J2260 und SAE J844 das Schlagzähigkeitsverhalten der Mehrschichtrohre bei Stoßeinwirkung bestimmt. Es wurden jeweils zehn Probekörper bei -40 °C gemessen und nach der Beanspruchung erfolgte eine visuelle Überprüfung auf Beschädigung.
d) Trennversuch: Der Trennversuch wurde mit einer Zugprüfmaschine des Typs BZ 2.5/TN1S der Firma Zwick durchgeführt, an der eine Zugvorrichtung und ein sich drehendes Metallrad befestigt sind, um die einzelnen Schichten der Probekörper voneinander trennen zu können. Über den Trennversuch in Anlehnung an DIN EN ISO 2411 wurde die Haftung zwischen zwei Schichten beurteilt, indem die Kraft gemessen wurde, die benötigt wird, um die beiden Schichten voneinander zu trennen. Hierfür wurden von den Mehrschichtrohren 20 cm lange Rohrabschnitte mit Hilfe einer Schneidevorrichtung längs gedrittelt.
   Vor Beginn der Messung wurde mit Hilfe eines Messschiebers die Probenbreite mehrfach an unterschiedlichen Stellen gemessen und der Mittelwert in die Auswertesoftware eingetragen. Danach wurde das angetrennte Ende einer Schicht in eine Klemme eingespannt, die diese kontinuierlich in einem Winkel von 90° von der zweiten Schicht abzog.
   Die Schichten wurden mit einer Prüfgeschwindigkeit von 50 mm/min voneinander abgezogen und parallel dazu wurde ein Diagramm der benötigten Kraft in Newton gegen den Weg in Millimetern aufgenommen. Aus diesem wurde der Trennwiderstand in N/mm ermittelt, der sich auf die Breite der haftenden Kontaktfläche bezieht.
e) Kraftstoffdurchlässigkeit: Über die Permeationsmessung wurde bestimmt, wie viel Kraftstoff pro Tag und Meter Rohr bzw. Quadratmeter Rohrinnenfläche bei einer statischen Lagerung bei 60 °C durch eine Kraftstoffleitung permeiert. Dazu wurden jeweils 300 mm lange Rohrabschnitte ausgewogen, anschließend mit 300 ml CE10 (Zusammensetzung gemäß ASTM D471: 45 Vol.-% Toluol, 45 Vol.-% Isooctan und 10 Vol.-% Ethanol) befüllt und die Enden verschlossen. Die befüllten Rohre wurden abermals ausgewogen, um in bestimmten Zeitabständen den Masseverlust und somit die permeierte Kraftstoffmasse bestimmen zu können. Die effektive Permeationslänge betrug dabei 285 mm.
f) Auswaschbeständigkeit: Mittels der Auswaschbestimmung wurde ermittelt, wieviel g/m² Rohrinnenfläche an löslichen und unlöslichen Bestandteilen aus dem Mehrschichtverbund nach Kraftstofflagerung extrahiert werden. Dazu wurde ein Rohrabschnitt von 2 m Länge vollständig mit dem Testkraftstoff FAM B (gemäß DIN 51604-1/2) befüllt und verschlossen bei 60 °C für 96 h gelagert. Nach Abkühlung wurde das Rohr in ein Becherglas entleert und mit 20 ml FAM B gespült. Die erhaltene Flüssigkeit wurde bei 23 °C 24 h gelagert. Im Anschluss wurde die Prüfflüssigkeit bei 23 °C unter Vakuum gefiltert und mit 20 ml FAM B nachgespült. Das gefilterte Medium ließ man im Abzug bei Raumtemperatur verdampfen. Daraus ergaben sich mittels Auswiegen die löslichen Extrakte. Der Filter wurde 24 h bei 40 °C getrocknet und ausgewogen. Über die Differenz zum ursprünglichen Gewicht des Filters wurden die unlöslichen Extrakte bestimmt.

Die Ergebnisse sind in der Tabelle 1 dargestellt.

**Tabelle 1: Schichtenkonfigurationen und Prüfergebnisse**

| | Vergleichsbeispiel 1 | Beispiel 1 |
|---|---|---|
| Schicht V | VESTAMID LX9002; 0,3 mm | VESTAMID LX9002; 0,45 mm |
| Schicht IV | VESTAMID SX8002; 0,1 mm | VESTAMID SX8002; 0,1 mm |
| Schicht III | EVAL F101; 0,15 mm | EVAL F101; 0,15 mm |
| Schicht II | -- | 0,1 mm |
| Schicht I | VESTAMID SX8001; 0,45 mm | 0,2 mm |
| Haftung [N/mm] | Schicht V zu Schicht IV: 9,5 | Schicht V zu Schicht IV:11,3 |
| | Schicht IV zu Schicht III: 8,3 | Schicht IV zu Schicht III: 9,6 |
| | Schicht III zu Schicht I: | Schicht III zu Schicht II: 8,7 |
| | Trennung nicht möglich | Schicht II zu Schicht I: |
| | | Trennung nicht möglich |
| Schlagzähigkeit 23 °C | kein Bruch | kein Bruch |
| -40 °C | kein Bruch | kein Bruch |
| Fallhammertest: | | |
| SAE J844, -40 °C | kein Bruch | kein Bruch |
| SAE J2260, -40 °C | kein Bruch | kein Bruch |
| Kraftstoffpermeation [g/(m²*d] | 1,5 | 1,9 |
| Auswaschbeständigkeit, unlösliche Extrakte [g/m²] | 0,32 | 0,16 |
| Auswaschbeständigkeit, lösliche Extrakte [g/m²] | 41,1 | 5,4 |

Das erfindungsgemäße Rohr erfüllt daher die Anforderungen, die an Kraftstoffleitungen gestellt werden und besitzt eine herausragende Auswaschbeständigkeit gegenüber momentan eingesetzten Rohren.

## Patentansprüche

1. Mehrschichtiger Hohlkörper, der folgende Schichten enthält:
I. Eine Innenschicht (Schicht I) dazu vorgesehen, in direktem Kontakt mit dem beförderten oder gelagerten Medium zu stehen, aus einer Formmasse auf Basis von PA11, PA12, PA612, PA610, PA1010, PA1012 und/oder PA1212 und deren Copolymeren sowie Mischungen daraus;
II. eine Haftvermittlerschicht (Schicht II) aus einer Formmasse auf Basis folgender Komponenten:
a) 0 bis 80 Gew.-Teile eines Polyamids, ausgewählt aus PA6, PA66, PA6/66 und Mischungen hiervon,
b) 0 bis 100 Gew.-Teile eines Polyamin-Polyamid-Copolymeren sowie
c) 0 bis 80 Gew.-Teile eines Polyamids, ausgewählt aus PA11, PA12, PA612, PA1010, PA1012, PA1212 und Mischungen hiervon,
wobei die Summe der Gewichtsteile der Komponenten gemäß a), b) und c) 100 beträgt und wobei zusätzlich in der Summe der Komponenten a) und b) mindestens 16 Gew.-Teile aus Monomereinheiten bestehen, die sich von Caprolactam und/oder der Kombination Hexamethylendiamin/Adipinsäure herleiten und in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.10-Decandisäure, der Kombination 1.10-Decandiamin/1.12-Dodecandisäure und/oder der Kombination 1.12-Dodecandiamin/1.12-Dodecandisäure herleiten;
III. eine Schicht (Schicht III) aus einer Ethylen-Vinylalkohol-Copolymer-Formmasse,
wobei
die Formmasse der Schicht I sowie auch die Formmasse der Schicht II keinen Weichmacher enthält
und wobei im Fall, dass die Schicht II ein Blend aus den Komponenten gemäß a) und c) ist, das Blend unter Bedingungen hergestellt wird, bei denen in einem gewissen Ausmaß die beiden Polyamide über die Endgruppen oder über Umamidierungsreaktionen miteinander zu Blockcopolymeren reagieren oder eine wirksamen Menge an Komponente gemäß b) zugegeben wird und
aus dem mehrschichtigen Hohlkörper als Gesamtsystem bei erstmaliger Kraftstofflagerung maximal 0,2 g/m² unlöslicher Extrakt sowie maximal 7,0 g/m² löslicher Extrakt ausgewaschen wird, bestimmt nach der als Prüfung f) im experimentellen Teil beschriebenen Methode an einem Mehrschichtrohr mit dem gleichen Schichtenaufbau, einer Wandstärke von 1 mm und einem Innendurchmesser von 6 mm,
wonach ein Rohrabschnitt von 2 m Länge vollständig mit dem Testkraftstoff FAM B (gemäß DIN 51604-1/2) befüllt und verschlossen bei 60 °C für 96 h gelagert wird, nach Abkühlung das Rohr in ein Becherglas entleert und mit 20 ml FAM B das Rohr gespült wird, die erhaltene Flüssigkeit bei 23 °C 24 h gelagert wird, im Anschluss die Prüfflüssigkeit bei 23 °C unter Vakuum filtriert wird und mit 20 ml FAM B nachgespült wird, das filtrierte Medium wird im Abzug bei Raumtemperatur verdampfen gelassen, daraus ergeben sich mittels Auswiegen die löslichen Extrakte, der Filter wird 24 h bei 40 °C getrocknet und ausgewogen, über die Differenz zum ursprünglichen Gewicht des Filters werden die unlöslichen Extrakte bestimmt.

2. Mehrschichtiger Hohlkörper gemäß Anspruch 1, **dadurch gekennzeichnet, dass** die Schichten I, II und III direkt aufeinander folgen.

3. Mehrschichtiger Hohlkörper gemäß einem der Ansprüche 1 bis 2, **dadurch gekennzeichnet, dass** das Polyamid der Formmasse der Schicht I PA612 ist.

4. Mehrschichtiger Hohlkörper gemäß einem der vorhergehenden Ansprüche, **dadurch gekennzeichnet, dass** sich nach außen hin mindestens eine weitere Schicht anschließt, die vorzugsweise aus einer Polyamidformmasse besteht.

5. Mehrschichtiger Hohlkörper gemäß Anspruch 4, **dadurch gekennzeichnet, dass** eine weitere Schicht eine Schicht IV ist, die die gleiche Polyamidkombination wie eine Schicht II enthält.

6. Mehrschichtiger Hohlkörper gemäß einem der Ansprüche 4 und 5, **dadurch gekennzeichnet, dass** eine der weiteren Schichten eine Schicht V ist, die auf eine Schicht IV folgt und die auf den gleichen Polyamiden basiert wie eine Schicht I.

7. Mehrschichtiger Hohlkörper gemäß einem der vorhergehenden Ansprüche, **dadurch gekennzeichnet, dass** er ein Hohlprofil, insbesondere ein Rohr oder ein Behälter ist.

8. Mehrschichtiger Hohlkörper gemäß Anspruch 7, **dadurch gekennzeichnet, dass** er eine oder mehrere weitere Schichten enthält, die ausgewählt sind aus einer elektrisch leitfähigen Schicht und einer Elastomerummantelung.

9. Mehrschichtiger Hohlkörper gemäß einem der vorhergehenden Ansprüche, **dadurch gekennzeichnet, dass** er eine Komponente eines kraftstoffführenden Systems ist.

10. Mehrschichtiger Hohlkörper gemäß Anspruch 9, **dadurch gekennzeichnet, dass** er eine Kraftstoffleitung oder ein Kraftstoffbehälter ist.

11. Verwendung des mehrschichtigen Hohlkörpers gemäß einem der vorgehenden Ansprüche als Komponente eines kraftstoffführenden Systems.

12. Kraftstoffführendes System umfassend einen mehrschichtigen Hohlkörper gemäß einem der vorhergehenden Ansprüche.

## Claims

1. Multilayer hollow body comprising the following layers:
I. an inner layer (layer I), intended for direct contact with the medium conveyed or stored, composed of a moulding composition based on PA11, PA12, PA612, PA610, PA1010, PA1012 and/or PA1212 and copolymers thereof and mixtures thereof;
II. an adhesion promoter layer (layer II) composed of a moulding composition based on the following components:
a) 0 to 80 parts by weight of a polyamide selected from PA6, PA66, PA6/66 and mixtures thereof,
b) 0 to 100 parts by weight of a polyamine-polyamide copolymer and
c) 0 to 80 parts by weight of a polyamide selected from PA11, PA12, PA612, PA1010, PA1012, PA1212 and mixtures thereof,
where the sum total of the parts by weight of components a), b) and c) is 100, and where, in addition, in the sum total of components a) and b), at least 16 parts by weight consists of monomer units which derive from caprolactam and/or the combination of hexamethylenediamine/adipic acid and, in the sum total of components b) and c), at least 20 parts by weight consists of monomer units which derive from ω-aminoundecanoic acid, laurolactam, the combination of hexamethylenediamine/dodecane-1,12-dioic acid, the combination of decane-1,10-diamine/decane-1,10-dioic acid, the combination of decane-1,10-diamine/dodecane-1,12-dioic acid and/or the combination of dodecane-1,12-diamine/dodecane-1,12-dioic acid;
III. a layer (layer III) composed of an ethylenevinyl alcohol copolymer moulding composition,
wherein
the moulding composition of layer I and preferably also the moulding composition of layer II does not comprise any plasticizer
and wherein, in the case that layer II is a blend of components a) and c), the blend is produced under conditions under which there is a certain degree of reaction of the two polyamides with one another via the end groups or via transamidation reactions to give block copolymers or an effective amount of component b) is added and
not more than 0.2 g/m² of insoluble extract and not more than 7.0 g/m² of soluble extract are leached out of the multilayer hollow body as an overall system on first exposure to fuel, determined by the method described as test f) in the Experimental on a multilayer pipe having the same layer structure, a wall thickness of 1 mm and an internal diameter of 6 mm,
in which a pipe section of length 2 m was filled completely with the FAM B test fuel (according to DIN 51604 - 1/2) and closed, and stored at 60°C for 96 h, after cooling the pipe was emptied into a beaker and rinsed with 20 ml of FAM B, the liquid obtained was stored at 23°C for 24 h, then the test liquid was filtered under reduced pressure at 23°C and rinsed through with 20 ml of FAM B, the filtered medium was left to evaporate in a fume hood at room temperature, which gave the soluble extracts by means of weighing, the filter was dried at 40°C for 24 h and weighed, and the difference from the original weight of the filter was used to determine the insoluble extracts.

2. Multilayer hollow body according to Claim 1, **characterized in that** layers I, II and III follow in direct succession.

3. Multilayer hollow body according to either of Claims 1 and 2, **characterized in that** the polyamide of the moulding composition of layer I is PA612.

4. Multilayer hollow body according to any of the preceding claims, **characterized in that** it is adjoined on the outside by at least one further layer preferably consisting of a polyamide moulding composition.

5. Multilayer hollow body according to Claim 4, **characterized in that** a further layer is a layer IV comprising the same polyamide combination as a layer II.

6. Multilayer hollow body according to either of Claims 4 and 5, **characterized in that** one of the further layers is a layer V which follows a layer IV and is based on the same polyamides as a layer I.

7. Multilayer hollow body according to any of the preceding claims, **characterized in that** it is a hollow profile, especially a pipe, or a vessel.

8. Multilayer hollow body according to Claim 7, **characterized in that** it comprises one or more further layers selected from an electrically conductive layer and an elastomer sheath.

9. Multilayer hollow body according to any of the preceding claims, **characterized in that** it is a component of a fuel system.

10. Multilayer hollow body according to Claim 9, **characterized in that** it is a fuel line or a fuel vessel.

11. Use of the multilayer hollow body according to any of the preceding claims as a component of a fuel system.

12. Fuel system comprising a multilayer hollow body according to any of the preceding claims.

## Revendications

1. Corps creux multicouche, qui contient les couches suivantes :
I. une couche intérieure (couche I) prévue pour être en contact direct avec le milieu transporté ou stocké, en un matériau de moulage à base de PA11, PA12, PA612, PA610, PA1010, PA1012 et/ou PA1212 et leurs copolymères, ainsi que leurs mélanges ;
II. une couche de promoteur d'adhésion (couche II) en un matériau de moulage à base des composants suivants :
a) 0 à 80 parties en poids d'un polyamide, choisi parmi le PA6, le PA66, le PA6/66 et leurs mélanges,
b) 0 à 100 parties en poids d'un copolymère de polyamine-polyamide, ainsi que
c) 0 à 80 parties en poids d'un polyamide, choisi parmi le PA11, le PA12, le PA612, le PA1010, le PA1012, le PA1212 et leurs mélanges,
la somme des parties en poids des composants selon a), b) et c) étant de 100 et, en outre, dans la somme des composants a) et b), au moins 16 parties en poids étant constituées par des unités monomères qui dérivent de caprolactame et/ou de la combinaison hexaméthylène-diamine/acide adipique et, dans la somme des composants b) et c), au moins 20 parties en poids étant constituées d'unités monomères qui dérivent d'acide ω-aminoundécanoïque, de laurine-lactame, de la combinaison hexaméthylène-diamine/acide 1,12-dodécanedioïque, de la combinaison 1,10-décane-diamine/acide 1,10-décanedioïque, de la combinaison 1,10-décane-diamine/acide 1,12-dodécanedioïque et/ou de la combinaison 1,12-dodécane-diamine/acide 1,12-dodécanedioïque ;
III. une couche (couche III) en un matériau de moulage d'un copolymère éthylène-alcool vinylique,
le matériau de moulage de la couche I, ainsi que le matériau de moulage de la couche II ne contenant pas de plastifiant,
et, dans le cas où la couche II est un mélange des composants selon a) et c), le mélange étant fabriqué dans des conditions dans lesquelles les deux polyamides réagissent l'un avec l'autre dans une certaine mesure par le biais des groupes terminaux ou par le biais de réactions de transamidation pour former des copolymères séquencés ou une quantité efficace du composant selon b) étant ajoutée, et
lors du premier stockage de carburant, au plus 0,2 g/m² d'extrait insoluble, ainsi qu'au plus 7,0 g/m² d'extrait soluble étant lixivié à partir du corps creux multicouche en tant que système global, déterminé selon la méthode décrite en tant que test f) dans la partie expérimentale sur un tube multicouche ayant la même structure de couches, une épaisseur de paroi de 1 mm et un diamètre intérieur de 6 mm,
selon laquelle une section de tube de 2 m de longueur est entièrement remplie avec le carburant d'essai FAM B (selon DIN 51604-1/2) et stockée à l'état fermé à 60 °C pendant 96 h, le tube est vidé dans un bécher après refroidissement et le tube est rincé avec 20 ml de FAM B, le liquide obtenu est stocké à 23 °C pendant 24 h, puis le liquide d'essai est filtré sous vide à 23 °C et rincé avec 20 ml de FAM B, le milieu filtré est laissé s'évaporer sous aspirateur à température ambiante, ce qui permet d'obtenir par pesée les extraits solubles, le filtre est séché pendant 24 h à 40 °C et pesé, les extraits insolubles sont déterminés par la différence avec le poids initial du filtre.

2. Corps creux multicouche selon la revendication 1, **caractérisé en ce que** les couches I, II et III sont directement successives les unes des autres.

3. Corps creux multicouche selon l'une quelconque des revendications 1 à 2, **caractérisé en ce que** le polyamide du matériau de moulage de la couche I est le PA612.

4. Corps creux multicouche selon l'une quelconque des revendications précédentes, **caractérisé en ce qu'**au moins une couche supplémentaire s'ensuit vers l'extérieur, qui est de préférence constituée par un matériau de moulage polyamide.

5. Corps creux multicouche selon la revendication 4, **caractérisé en ce qu'**une couche supplémentaire est une couche IV, qui contient la même combinaison de polyamide qu'une couche II.

6. Corps creux multicouche selon l'une quelconque des revendications 4 et 5, **caractérisé en ce qu'**une des couches supplémentaires est une couche V, qui suit une couche IV et qui est à base des mêmes polyamides qu'une couche I.

7. Corps creux multicouche selon l'une quelconque des revendications précédentes, **caractérisé en ce qu'**il s'agit d'un profilé creux, notamment d'un tube ou d'un contenant.

8. Corps creux multicouche selon la revendication 7, **caractérisé en ce qu'**il contient une ou plusieurs couches supplémentaires, qui sont choisies parmi une couche électriquement conductrice et un gainage élastomère.

9. Corps creux multicouche selon l'une quelconque des revendications précédentes, **caractérisé en ce qu'**il s'agit d'un composant d'un système de conduction de carburant.

10. Corps creux multicouche selon la revendication 9, **caractérisé en ce qu'**il s'agit d'une conduite de carburant ou d'un contenant de carburant.

11. Utilisation du corps creux multicouche selon l'une quelconque des revendications précédentes en tant que composant d'un système de conduction de carburant.

12. Système de conduction de carburant comprenant un corps creux multicouche selon l'une quelconque des revendications précédentes.
